# EUROPEAN PATENT SPECIFICATION

(11) **EP 2 995 987 B1**
(45) Date of publication and mention of the grant of the patent: **02.01.2019**
(21) Application number: 15184522.9
(22) Date of filing: 09.09.2015
(51) Int. Cl.: G02B 27/22, F21V 8/00

(54) **BACKLIGHT AND IMAGE DISPLAY DEVICE USING THE SAME**
RÜCKBELEUCHTUNG UND BILDANZEIGEVORRICHTUNG DAMIT
RÉTROÉCLAIRAGE ET DISPOSITIF D'AFFICHAGE D'IMAGES L'UTILISANT

(30) Priority: 11.09.2014 KR 20140120360
(43) Date of publication of application: 16.03.2016
(73) Proprietor: LG Display Co., Ltd., Seoul 150-721 (KR)
(72) Inventor: KIM, HanSeok, Paju-si Gyeonggi-do (KR); PARK, JoonYoung, Gyeonggi-do (KR)
(74) Representative: Jackson, Richard Eric

(56) References cited:
- WO-A1-2013/089172
- WO-A2-2012/174364
- US-A1- 2010 231 491
- US-A1- 2011 228 195
- US-A1- 2013 335 821

## Description

### BACKGROUND OF THE INVENTION

### 1. Field of the invention

The present invention relates to a display device having a backlight unit, and more particularly, to a backlight unit that is applicable during the implementation of planar and stereoscopic images without a light guide plate and an image display device using the same.

### 2. Description of the related art

Stereoscopic image display devices may be divided into a stereoscopic technique and an autostereoscopic technique. The stereoscopic technique uses the parallex images of left and right eyes having a large stereoscopic effect, and includes a glasses technique and a glasses-free technique, and both the techniques are practically used.

The glasses technique displays the polarization of the right and left parallax images on a direct view type display device or projector in an alternate manner and implements a stereoscopic image using polarized glasses or display the right and left parallax images in a time division manner and implements a stereoscopic image using shutter glasses.

The glasses-free technique divides the optical axes of the right and left parallax images using an optical plate such as a parallex barrier, a lenticular lens sheet or switchable lens/barrier to implement a stereoscopic image.

Due to convenience capable of allowing a user to view a stereoscopic image without wearing shutter or polarized glasses, in recent years, the glasses-free technique has been applied to small-to-medium-sized displays such as a smart phone, a tablet, a notebook, and the like.

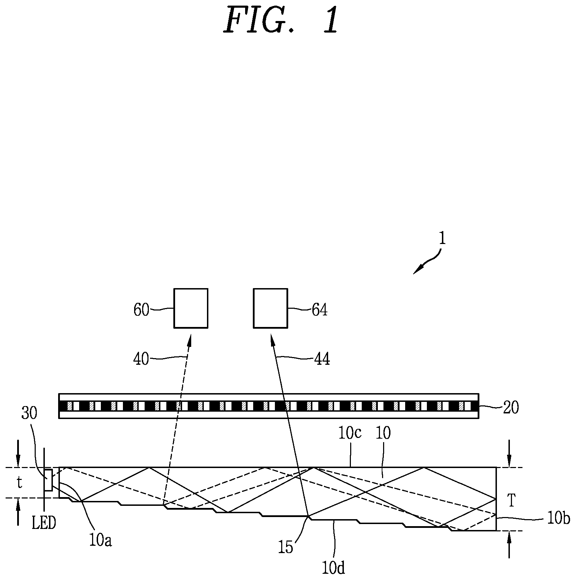

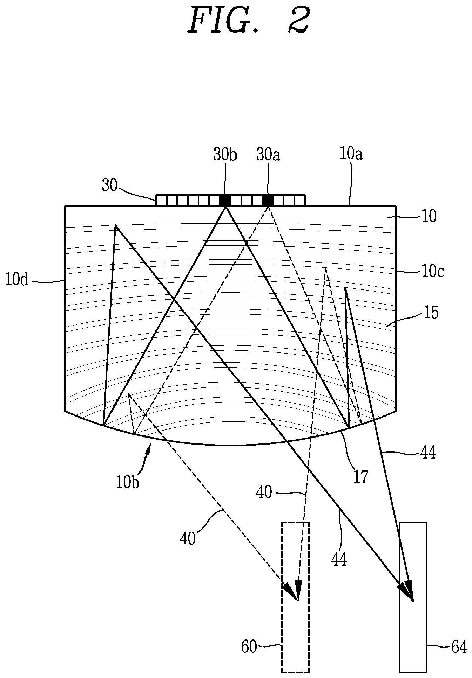

The structure of a backlight unit in the related art employing such a glasses-free technique will be schematically described as follows with reference to FIGS. 1 and 2.

FIG. 1 is a schematic side view illustrating a display device having a backlight unit employing a glasses-free technique in the related art.

Referring to FIG. 1, a glasses-free display device in the related art may include a wedge-type light guide plate 10 configured to change a light travelling direction, and a liquid crystal panel 20 disposed on an upper portion of the light guide plate 10 to implement an image through incident light from the light guide plate 10, and a LED light source array 30 disposed on a lateral surface of the light guide plate 10 to emit light into the light guide plate 10.

Here, the wedge-type light guide plate 10 may include a thin end portion 10a corresponding proximately to the LED light source array 30, a thick end portion 10b corresponding to the thin end portion 10a, an outgoing light surface 10c in contact with the thin end portion 10a and thick end portion 10b to emit light toward the liquid crystal panel 20, and a bottom surface 10d formed with a plurality of step patterns 15 to correspond to the outgoing light surface 10c at a predetermined interval.

The thick end portion 10b of the light guide plate 10 is formed with a reflective curved surface 17, and the thin end portion 10a and outgoing light surface 10c are formed on a flat surface.

Referring to FIG. 2, light propagated from the LED light source in a first direction array 30 may be guided to an inside of the wedge-type light guide plate 10 therethrough without meaningful loss, and light reflected and propagated from the inside of the light guide plate 10 in a second direction is extracted from the light guide plate 10 to an outside thereof using the step patterns 15.

Referring to FIG. 1, light generated from the LED light source array 30 is propagated in a first direction to the thick end portion 10b along the length of the light guide plate from the thin end portion 10a of the light guide plate 10, and subsequently reflected from the thick end portion 10b of the light guide plate 10, and then when moving to the thin end portion 10a in a second direction along the length of the light guide plate, light may be propagated to the thin end portion 10a and at any position thereof along the length of the light guide plate, and light may be extracted from the light guide plate 10 through a mutual interaction with the step patterns 15. In other words, light may be homogenized and extended while being propagated in a first direction prior to being reflected from a non-flat surface, and extracted while being propagated in a second direction.

The step patterns 15 of the light guide plate 10 do not substantially have an optical directional function for light passing through the light guide plate from a first incident side to a second reflective side, thereby accomplishing a long rear working distance of the light reflective side as well as accomplishing a small thickness of the light guide plate.

FIG. 2 is a plan view illustrating a light guide plate for schematically explaining the travelling state of light extracted through a first and a second light source and a reflective curved surface of the backlight unit employing a glasses-free technique in the related art.

FIG. 3 is a simulation view schematically illustrating whether or not there is an optical loss when using a light guide plate of the backlight unit in the related art.

Referring to FIG. 2, a beam 40 emitted from a first light source 30a in the wedge-type light guide plate 10 is directed to a first viewing window 60, and a beam 44 emitted from a second light source 30b is directed to a second viewing window 64 separated from the first viewing window 60 in a horizontal direction by the reflective curved surface 17 and step patterns 15 at the thick end portion 10b.

In particular, light emitted from two LED light sources 30a, 30b is entered to the thin end portion 10a of the wedge-type light guide plate 10, and then diffused in a fan-shaped manner to the thick end portion 10b at an opposite side formed with the reflective curved surface 17, wherein the optical path of the diffused beams 40, 44 is converted and reflected on the reflective curved surface 17 in a substantially parallel manner (i.e., distant reflective focal length).

The beams 40, 44 reflected in a substantially parallel manner through the reflective curved surface 17 are sent to the first and the second viewing window 60, 64, respectively, in a planar light source form through the step patterns 15 formed on the bottom surface 10f to implement a three-dimensional image display.

However, the forming of special micro-patterns such as the step patterns 15 of the wedge-type light guide plate 10 has a level of difficulty in commercialization, and the extent of cost increase has a disadvantage in which mass-production is difficult even when increasing facility investment due to a failure rate of more than 90% with current technologies.

Furthermore, in case of a backlight unit in the related art, the thickness of an upper bezel may increase due to a reflective curved surface formed on an outgoing light surface of the wedge-type light guide plate, thereby causing design restrictions.

In addition, a lower step pattern structure of the wedge-type light guide plate requires precise machining, and a mold injection method should be used to produce the step pattern structure. However, even if precise machining is possible for the mold, there is no method for solving the crushing phenomenon of the step pattern structure at a micro level when putting PMMA mold resin into the mold frame.

Moreover, even when the step patterns are solved, the wedge-type light guide plate itself should be produced using an injection method, thereby causing difficulty in large-sized production.

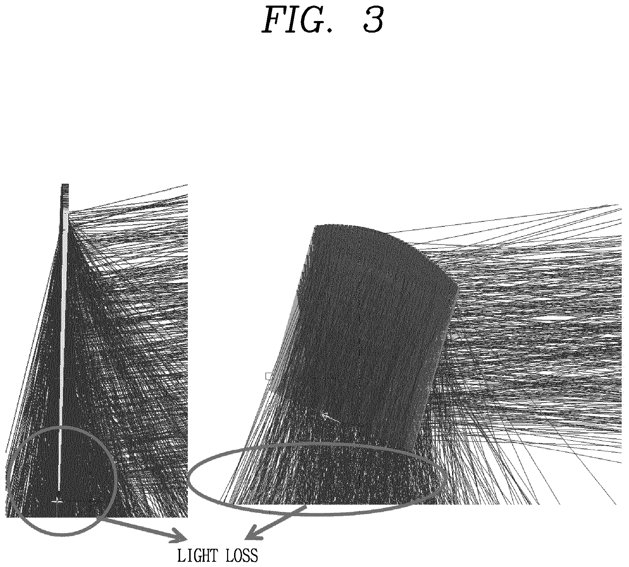

Furthermore, in case of the wedge-type light guide plate in the related art, even when the lower step pattern structure of the light guide plate is completely designed, there is no method of eliminating optical loss to a lower end portion of the light guide plate generated due to the principle of the structure as illustrated in FIG. 3, and desired light control becomes difficult since a much larger optical loss occurs when precise machining is not carried out due to the difficulty of the manufacture.

US2013/0335821A1 describes an imaging directional backlight apparatus for providing large area uniform directed illumination from localized light sources having a waveguide with a stepped structure.

WO2012/174364A2 describes embodiments that relate to private video presentation.

WO2013/089172A1 describes a light source device provided with a light emitting element, a main concave surface mirror for reflecting light beamed from the light-emitting element and a subsidiary concave surface mirror for reflecting a part of the light beamed from the light emitting element.

US2010/0231491A1 describes a light source device with high use efficiency.

US2011/0228195A1 describes an LCD backlight with a light source that emits laser light.

### SUMMARY OF THE INVENTION

An object of the present invention is to provide a backlight unit that is applicable during the implementation of planar and stereoscopic images without a light guide plate and an image display device using the same.

In order to accomplish the foregoing tasks, according to an aspect, there is provided a backlight unit as defined in claim 1.

In the backlight unit, a plurality of prism patterns may be formed to be separated from each other along a length direction on the light path conversion sheet to change a light path so as to allow light diffused in a fan-shaped manner from the light source and reflected through the reflecting plate to be directed to the display panel.

In the backlight unit, the light path conversion sheet may include a hologram film or the like using a diffractive optic in addition to a geometrical optical method such as a prism diffusion sheet, a reflector, and the like.

In the backlight unit, the reflecting plate is a curved-shaped mirror.

The mirror may include a reflecting member (including a hologram film or the like) using diffraction in addition to a geometrical optical mirror.

In the backlight unit, the light source may be a laser light source, a light emitting diode (LED) light source or an organic luminescence emitted diode (OLED).

In the backlight unit, when the light source is a laser light source, an expander for condensing light may be disposed between the laser light source and the light path conversion sheet.

The expander may include all types of lenses and holograms, and the like configured to diffuse light in a fan-shaped manner.

In order to solve the foregoing tasks, there is provided an image display device as defined in the claims, including a display panel configured to display a left-eye image and a right-eye image in a time division manner; a first light source configured to irradiate first light for a first period of time in which the left-eye image is displayed and a second light source configured to irradiate second light for a second period of time in which the right-eye image is displayed; a light path conversion sheet disposed adjacent to the first and the second light source; and a reflecting plate disposed to face the first and the second light source at an upper edge portion of the light path conversion sheet.

In the image display device, a plurality of prism patterns may be formed to be separated from each other along a length direction on the light path conversion sheet to change a light path so as to allow light diffused in a fan-shaped manner from the first and the second light source and reflected through the reflecting plate to be directed to the display panel.

In the image display device, the light path conversion sheet may include a hologram film or the like using a diffractive optic in addition to a geometrical optical method such as a prism diffusion sheet, a reflector, and the like.

In the image display device, the reflecting plate is a curved-shaped mirror.

The mirror may include a reflecting member (including a hologram film or the like) using diffraction in addition to a geometrical optical mirror.

In the image display device, the first and the second light source may be laser light sources, light emitting diode (LED) light sources or organic luminescence emitted diodes (OLEDs).

In the image display device, when the first and the second light source are laser light sources, an expander for condensing light may be disposed between the laser light source and the light path conversion sheet.

The expander may include all types of lenses and holograms, and the like configured to diffuse light in a fan-shaped manner.

In order to solve the foregoing tasks, there is provided an image display device as defined in the claims, including a display panel configured to display an image; a light source configured to provide light to the display panel; a light path conversion sheet disposed adjacent to the light source; and a reflecting plate disposed to face the light source at an upper edge portion of the light path conversion sheet.

In the image display device, a plurality of prism patterns may be formed to be separated from each other along a length direction on the light path conversion sheet to change a light path so as to allow light diffused in a fan-shaped manner from the light source and reflected through the reflecting plate to be directed to the display panel.

In the image display device, the light path conversion sheet may include a hologram film or the like using a diffractive optic in addition to a geometrical optical method such as a prism diffusion sheet, a reflector, and the like.

In the image display device, the reflecting plate is a curved-shaped mirror.

The mirror may include a reflecting member (including a hologram film or the like) using diffraction in addition to a geometrical optical mirror.

In the image display device, the light source may be a laser light source, a light emitting diode (LED) light source or an organic luminescence emitted diode
(OLED).

In the image display device, when the light source is a laser light source, an expander for condensing light may be disposed between the laser light source and the light path conversion sheet.

The expander may include all types of lenses and holograms, and the like configured to diffuse light in a fan-shaped manner.

A backlight unit according to the present disclosure and an image display device using the same may remove a wedge-type light guide plate using a special mold injection method in the related art that requires a difficult and expensive manufacturing process.

Furthermore, a backlight unit according to the present disclosure and an image display device using the same may remove a light guide plate in the related art, thereby allowing lightweight and low profile designs as well as additionally removing rigid mechanical structures.

In addition, a backlight unit according to the present disclosure and an image display device using the same may use individual R, G and B laser light sources, thereby allowing a full-color representation as well as enhancing color tones.

Moreover, a backlight unit according to the present disclosure and an image display device using the same may use a polarized laser light source, thereby removing a sheet of polarized film that has been adhered to a rear surface of the display device between two sheets of polarized films which are necessarily required in the display device in the related art.

Moreover, a backlight unit according to the present disclosure and an image display device using the same may not require the design and manufacture of a step pattern structure at a lower end portion of the light guide plate as in the related art, thereby completely eliminating the occurrence of defects.

On the other hand, a backlight unit according to the present disclosure and an image display device using the same may remove a wedge-type light guide plate in the related art, thereby increasing luminous efficiency by more than 300%.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic side view illustrating a display device having a backlight unit employing a glasses-free technique in the related art;
FIG. 2 is a plan view illustrating a light guide plate for schematically explaining the travelling state of light extracted through a first and a second light source and a reflective curved surface of the backlight unit employing a glasses-free technique in the related art;
FIG. 3 is a simulation view schematically illustrating whether or not there is an optical loss when using a light guide plate of the backlight unit in the related art;

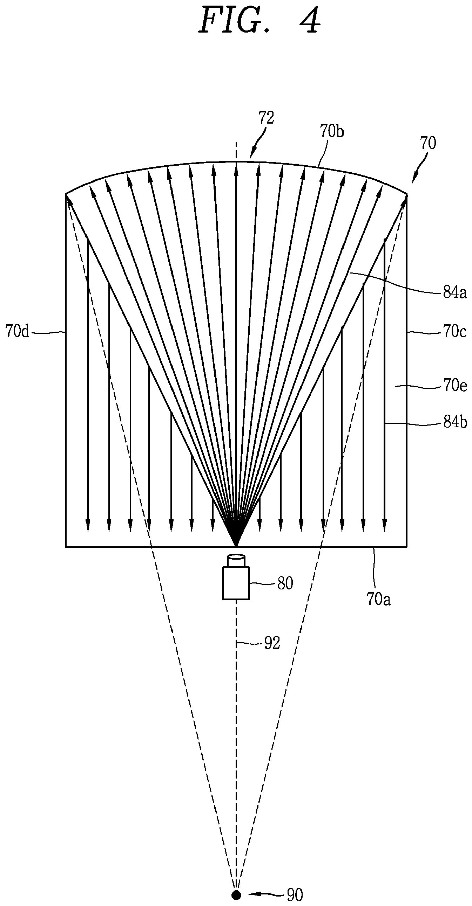

FIG. 4 is a schematic view illustrating paths through which beams from a light source are propagated and reflected to a reflective curved surface;

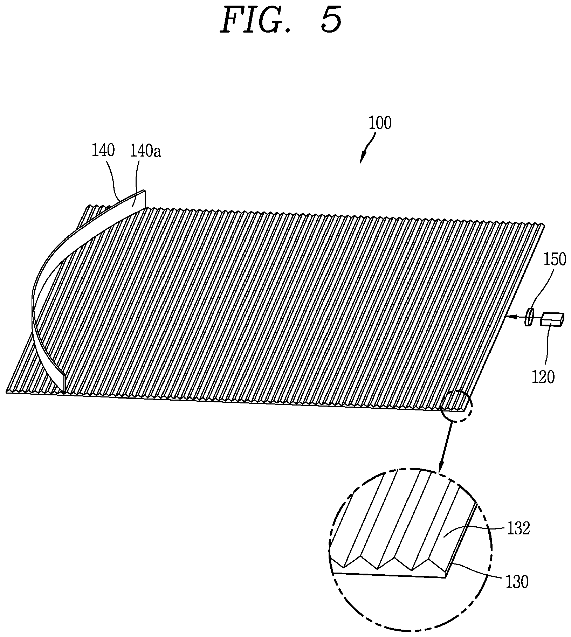

FIG. 5 is a combined perspective view schematically illustrating a backlight unit applied to an image display device according to an embodiment of the present disclosure;

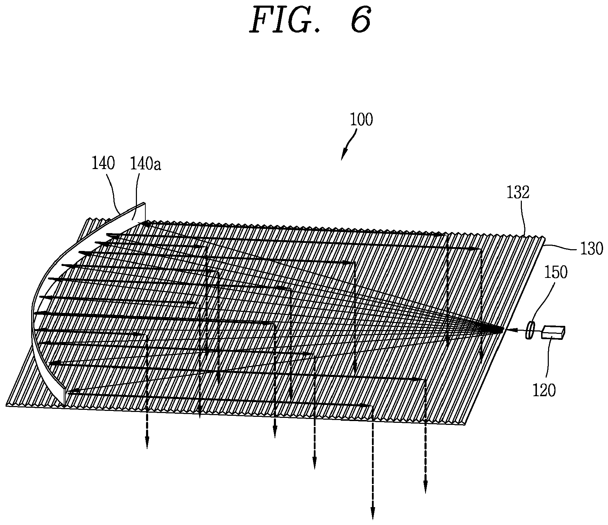

FIG. 6 is a schematic view schematically illustrating a travelling path of light emitted from a light source of a backlight unit applied to an image display device according to an embodiment of the present disclosure;

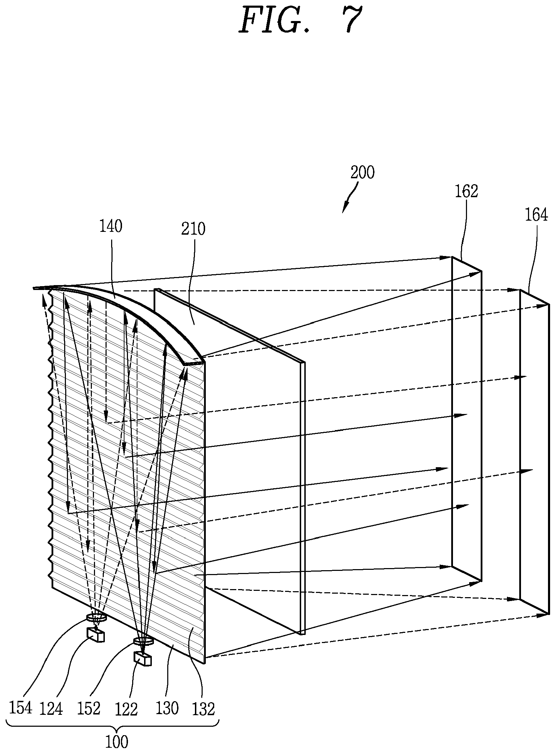

FIG. 7 is a perspective view schematically illustrating a stereoscopic image display device to which a backlight unit according to another embodiment of the present disclosure is applied;

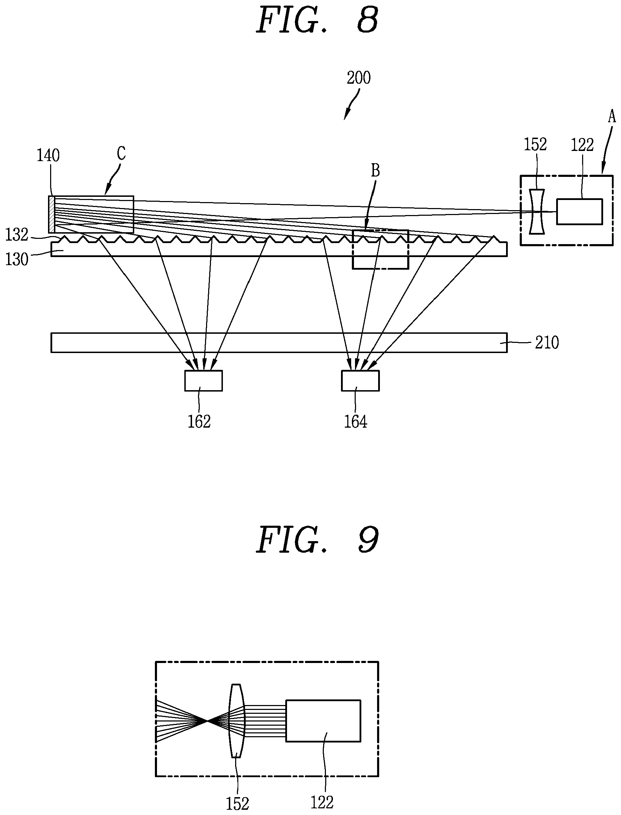

FIG. 8 is a view schematically illustrating a travelling path of light emitted from a light source as a side view of a stereoscopic image display device to which a backlight unit according to another embodiment of the present disclosure is applied;
FIG. 9 is a plan view schematically illustrating light sources, an exit lens and travelling paths of beams emitted from the light sources as an enlarged plan view of portion "A" of FIG. 8;

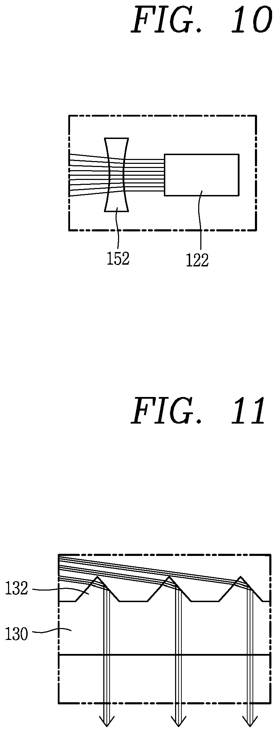

FIG. 10 is a side view schematically illustrating light sources, an exit lens and travelling paths of beams emitted from the light sources as an enlarged side view of portion "A" of FIG. 8;
FIG. 11 is a side view schematically illustrating a light path conversion sheet and beam paths refracted and propagated from the light path conversion sheet as an enlarged side view of portion "B" of FIG. 8;

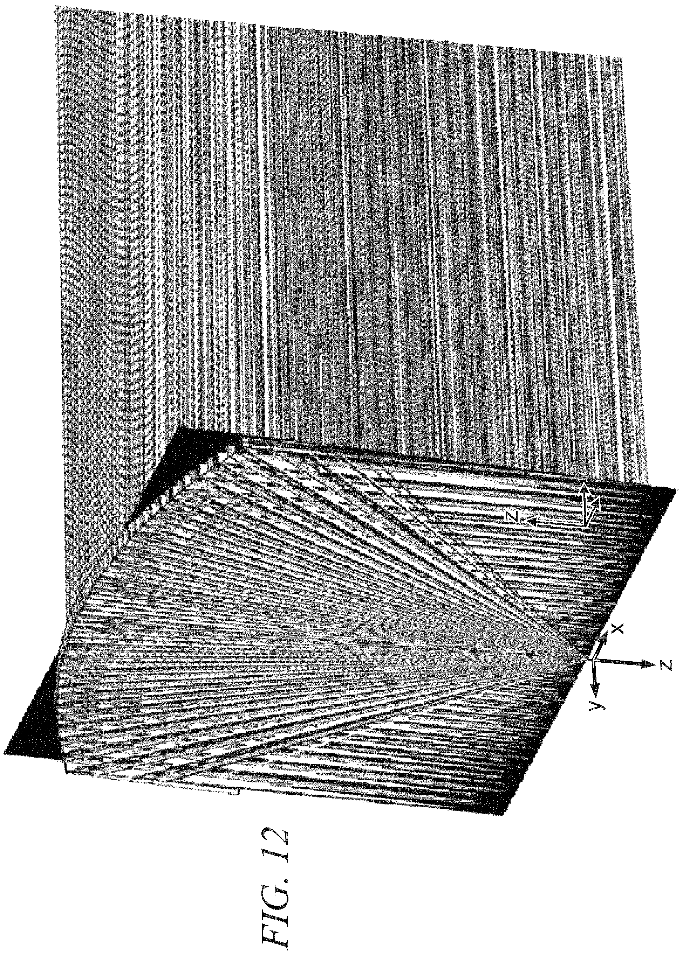

FIG. 12 is a simulation view schematically illustrating light travelling paths in a backlight unit of an image display device according to an embodiment of the present disclosure; and

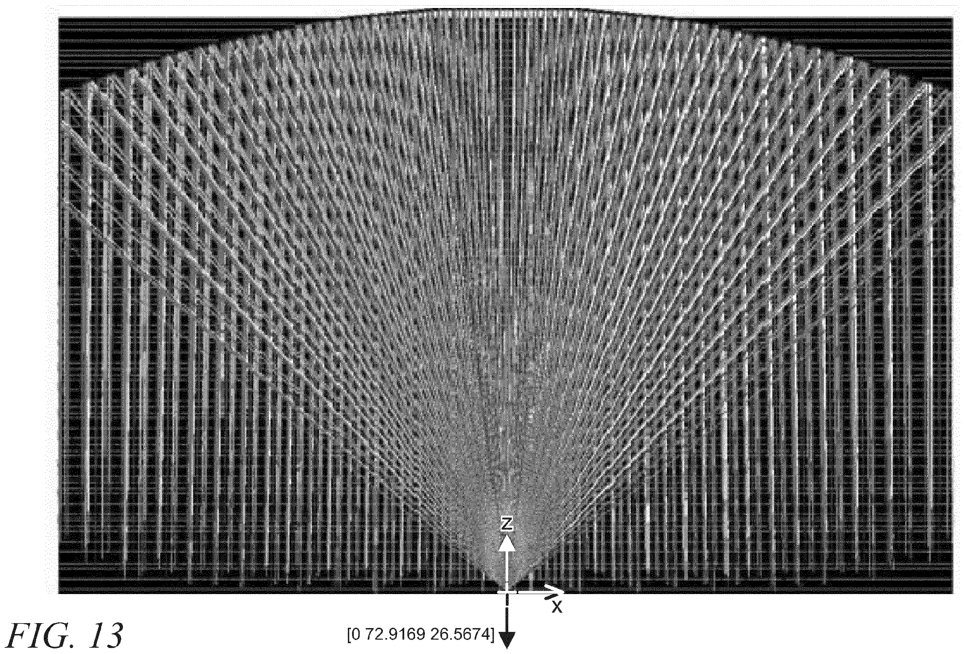

FIG. 13 is a simulation view schematically illustrating light travelling paths when using individual R, G and B laser light sources in a backlight unit of an image display device according to another embodiment of the present disclosure.

### DETAILED DESCRIPTION OF THE INVENTION

An embodiment of the present disclosure may provide a backlight unit that is applicable to the implementation of planar and stereoscopic images without a light guide plate and an image display device using the same.

Such an element may be used for a directional backlight unit to provide a directional display including a stereoscopic image display. Moreover, an embodiment may provide a controlled light source for an efficient stereoscopic image display. In addition to this, an embodiment may relate to a directional backlight device and a directional display including the directional backlight device. Such a device may be used for the application of a glasses-free stereoscopic image display, a privacy display and another directional display.

An embodiment of the present disclosure may be used for various optical systems, display systems and projection systems. An embodiment may include various projectors, projection systems, optical elements, displays, micro displays, computer systems, processors, self-contained projection systems, visual and/or audio-visual systems, and electrical and/or optical devices or operated with one of them.

An aspect of the present disclosure may be used for any device related to any device including an optical and electrical device, an optical system, a display system, an entertainment system, a presentation system or any type of optical system in actuality. Accordingly, an embodiment of the present disclosure may be used for an optical system, a device used for visual and/or optical presentation, a visual peripheral, or the like and a plurality of computing environments.

Prior to describing a disclosed embodiment, it should be understood by those skilled in the art that the present disclosure is not limited to the details of a specific configuration illustrated in the application and manufacture thereof since the present disclosure effectuates another embodiment. Moreover, an aspect of the present disclosure may be described with a different combination and configuration to define its own unique embodiment. Furthermore, technical terms used in the present disclosure are provided for the description thereof, but may not be necessarily limited to those terms.

FIG. 4 is a schematic view illustrating paths through which beams from a light source are propagated and reflected to a reflective curved surface. The light guide plate of FIG. 4 may not be restrictive, and merely referred to as itself for discussion. In other words, though a case of not using a light guide plate is described in the present disclosure, the structure of a light guide plate is shown to describe the travelling principle of light propagated and reflected on a reflective curved surface.

The plan view of FIG. 4 includes a LED light source 80 that can be used to illuminate a light guide plate 70.

Though the LED light source 80 is discussed as a light source in connection with an embodiment discussed in the present disclosure, any light source such as a laser light source, a local field emission source, an organic light emitting array (not limited to them), and the like may be used.

In FIG. 4, beams 84a propagated in a first direction may be guided through the light guide plate 70 without meaningful loss, and beams 84b propagated in a second direction may be extracted from the light guide plate 70 using a step pattern (not shown).

Referring to FIG. 4, the light guide plate 70 is configured in such a manner that light emitted from the LED light source 80 disposed adjacent to a light incident surface 70a of the light guide plate is exited from the viewing surface 70e of the light guide plate 70.

The term "viewing surface" indicates that a rear surface (not shown) on an opposite side of the viewing surface 70e is closer to a viewer.

The boundary of the viewing surface 70e and rear surface (not shown), respectively, is determined by lateral surfaces 70c, 70d, a light incident surface 70a and an opposite incident surface 70b. In FIG. 4, the viewing surface 70e faces a viewer viewing this page, and the rear surface (not shown) is hidden from the shape of the light guide plate 70.

The light guide plate 70 is configured such that beams 84a injected into an optical interface of the light incident surface 70a are diffused through total reflection as approaching the opposite incident surface 70b.

In an embodiment illustrated in FIG. 4, a reflective curved surface 72 is bent with a uniform radius of curvature having a center of curvature 90, and the light source 80 injects light into a focal point of the reflective curved surface 72, and the focal point is located at a half of the radius of curvature.

Each of the beams 84a is reflected on the reflective curved surface 72 in parallel to each of the other beams and propagated along a length direction of the light guide plate 70.

The beams 84a are redirected to the light incident surface 70a from the opposite incident surface 70b until the beams intersect the viewing surface 70e at a critical angle of reflection of the viewing surface 70e, and the beams 84b are exited in parallel to a straight direction as collimated light.

In an embodiment including a plurality of light sources disposed adjacent to the light incident surface 70a along the light incident surface 70a, it is preferable that the lateral surface 70c, 70d of the light guide plate 70 is slightly shorter to allow a light source at one side of the center line to stay at a focal point of the reflective curved surface 72.

In particular, the beams 84a propagated from the LED light source 80 disposed adjacent to the light incident surface 70a of the light guide plate 70 provide fan-shaped primary beams that can be propagated to the reflective curved surface 72 of the opposite incident surface 70b, and the beams 84b are propagated in a length direction of the light guide plate 70 in substantially parallel thereto while being reflected from the reflective curved surface 72.

A backlight unit according to an embodiment of the present disclosure applied to a planar and stereoscopic image display device without a light guide plate and an image display device using the same will be described in detail with reference to the accompanying drawings by applying the travelling principle of beams 84b in which the beams 84a emitted from a light source are diffused in a fan-shaped manner and reflected in parallel in a straight manner on the reflective curved surface 72.

Hereinafter, preferred embodiments according to the present disclosure will be described in detail with reference to the accompanying drawings. The same reference numerals designate the same constituent elements throughout the specification. In the following description, the detailed description will be omitted when a specific description for publicly known functions or configurations to which the invention pertains is judged to obscure the gist of the present invention. The name of a constituent element used in the following description may be selected in consideration of facilitating the writing of the specification, and may be different from that of a component in the actual product.

FIG. 5 is a combined perspective view schematically illustrating a backlight unit applied to an image display device according to an embodiment of the present disclosure.

The present disclosure will be described around a backlight unit applied to an image display device for implementing planar images. However, the backlight unit may not be applicable only to a case of implementing planar images in a restricted manner, and may be also applicable to a stereoscopic image display device for selectively driving at least two light sources to alternately display left-eye and right eye images in a time division manner.

Referring to FIG. 5, a backlight unit 100 according to an embodiment of the present disclosure may be disposed on a rear surface of the display panel (not shown, refer to reference numeral 200 in FIG. 7) to irradiate light to a front surface of the display panel 200.

The backlight unit 100 may include a light source 120 configured to provide light to the display panel 200, a light path conversion sheet 130 disposed adjacent to the light source, and a reflecting plate 140 disposed to face the light source 120 at an upper edge portion of the light path conversion sheet 130.

Though a case where a laser light source is used for the light source 120 is described in this specification, any light source such as a LED light source, a local field emission source, an organic light emitting array (not limited to them), and the like may be also used in addition to the laser light source.

The light source 120 may have a shape extended in a length direction along a lateral surface of the light path conversion sheet 130, and may be formed with one light source or a plurality of light sources may be arranged in a row.

Though it is illustrated in FIG. 5 that one light source 120 is provided therein, the number and location of the light source 120 may not be necessarily limited, and the light source 120 may include one light source or a plurality of light sources.

In other words, when the backlight unit 100 according to an embodiment of the present disclosure is applied during the implementation of planar images, one light source or a plurality of light sources used as the light source 120 may be driven at the same time to propagate light emitted from the light source to the display panel 200, thereby implementing planar images from the display panel 200.

On the other hand, when the backlight unit 100 according to an embodiment of the present disclosure is applied during the implementation of planar images, it is configured to individually turn on a plurality of light sources, respectively, which are used for the light source 120. In other words, any one of a plurality of light sources, for example, a first light source and a second light source is controlled to be on, and the remaining one is controlled to be off such that different images are viewed from the viewer's left-eye and right-eye through the display panel 200 to implement a stereoscopic image. Here, the first and the second lateral surface, respectively, denote at least one or more light source.

An expander 150 is disposed between the light source 120 and the light path conversion sheet 130 to condense light emitted from the light source 120 in a horizontal direction so as to diffuse it in a fan-shaped manner. Here, the expander 150 may include all types of lenses, hologram films, and the like for diffusing light in a fan-shaped manner.

A plurality of scattering patterns 132 configured in a prism shape at regular intervals in a length direction of the light path conversion sheet 130 is formed on an upper surface of the light path conversion sheet 130 to change a light path so as to allow light diffused in a fan-shaped manner from the light source 120 and reflected through the reflecting plate 140 to be directed to the display panel. Here, the scattering patterns 132 may be formed with any pattern capable of diffusing and scattering light instead of a prism-shaped pattern. For example, they may be formed in various forms such as a hemispherical pattern, a conical pattern or a dot pattern. The scattering patterns 132, respectively, may be formed in a direction crossing a travelling direction of light emitted from the light source 120, namely, a width direction of the light path conversion sheet 130.

The light path conversion sheet 130 may include a hologram film or the like using a diffractive optic in addition to a geometrical optical method such as a prism diffusion sheet, a reflector, and the like.

Furthermore, the reflecting plate 140 is formed with a curved-shaped mirror, and disposed at an upper edge portion of the light path conversion sheet 130, namely, an upper surface of the light path conversion sheet 130 located at the farthest from the light source 120. Here, the reflecting plate 140 is configured such that both ends thereof are bent in an inward direction around the central portion to have a curved surface 140a. Meanwhile, the reflecting plate 140 may include another shaped mirror other than a curved surface, and the mirror may include a reflecting member (including a hologram film or the like) using diffraction in addition to a geometrical optical mirror.

Accordingly, the reflecting plate 140 may be formed with a curved-shaped mirror to effectively reflect light propagated from the light source so as to change a light path to be directed to the light path conversion sheet 130, thereby effectively performing light path conversion even when the light guide plate is removed as in the related art.

FIG. 6 is a schematic view schematically illustrating a travelling path of light emitted from a light source of a backlight unit applied to an image display device according to an embodiment of the present disclosure.

Referring to FIG. 6, light emitted from the laser light source 120 is diffused and propagated in a horizontal direction through the expander 150 and then reflected through a curved surface 140a of the reflecting plate 140 disposed at an upper edge portion of the light path conversion sheet 130 and directed and propagated to the light path conversion sheet 130.

Straight light reflected through the curved surface 140a of the reflecting plate 140 is refracted at a predetermined angle through a plurality of scattering patterns 132 formed on an upper surface of the light path conversion sheet 130 to change the light path to the display panel 200 below.

As described above, light emitted from the light source 120 is reflected on the reflecting plate 140 and then the light path is changed through the light path conversion sheet 130 and propagated to the display panel 200, thereby implementing an image from the display panel 200.

In this manner, a backlight unit according to an embodiment of the present disclosure may propagate light emitted from the light source 120 toward the display panel 200 using the light path conversion sheet 130 and reflecting plate 140 even when the light guide plate is removed, thereby implementing planar images through the display panel 200.

Accordingly, a backlight unit according to the present disclosure may remove a wedge-type light guide plate using a special mold injection method in the related art that requires a difficult and expensive manufacturing process.

Furthermore, a backlight unit according to the present disclosure may remove a light guide plate in the related art, thereby allowing lightweight and low profile designs as well as additionally removing rigid mechanical structures.

On the other hand, an image display device to which a backlight unit according to another embodiment of the present disclosure will be described in more detail with reference to the accompanying drawings.

A backlight unit of an image display device according to another embodiment of the present disclosure has the same configuration as that of a backlight unit according to an embodiment of the present disclosure excluding that a light source and a display panel are additionally disposed on a backlight unit according to an embodiment of the present disclosure in FIG. 5.

FIG. 7 is a perspective view schematically illustrating a stereoscopic image display device to which a backlight unit according to another embodiment of the present disclosure is applied.

FIG. 8 is a view schematically illustrating a travelling path of light emitted from a light source as a side view of a stereoscopic image display device to which a backlight unit according to another embodiment of the present disclosure is applied.

FIG. 9 is a plan view schematically illustrating light sources, an exit lens and travelling paths of beams emitted from the light sources as an enlarged plan view of portion "A" of FIG. 8.

FIG. 10 is a side view schematically illustrating light sources, an exit lens and travelling paths of beams emitted from the light sources as an enlarged side view of portion "A" of FIG. 8.

FIG. 11 is a side view schematically illustrating a light path conversion sheet and beam paths refracted and propagated from the light path conversion sheet as an enlarged side view of portion "B" of FIG. 8.

Referring to FIG. 7, a glasses-free stereoscopic image display device 200 according to another embodiment of the present disclosure may include a display panel 210 and a backlight unit 100. The display panel 210 is disposed at an upper portion of the backlight unit 100. The display panel 210 according to another embodiment of the present disclosure is described around the implementation of a liquid crystal display panel.

Though not shown in the drawing, the display panel 210 may include two substrates. A liquid crystal layer is formed between the two substrates. Data lines and gate lines (or scan lines) are formed in a mutually intersecting manner on a lower substrate of the display panel 210, and a thin film transistor array in which pixels are disposed in a matrix form is formed in cell regions defined by the data lines and gate lines. The pixels of the display panel, respectively, are connected to a thin film transistor and driven by an electric field between a pixel electrode and a common electrode.

A color filter array including a black matrix, a color filter, and the like is formed on an upper substrate of the display panel 210. Furthermore, an alignment layer for setting a pretilt angle of liquid crystals is formed on the upper and lower substrates.

A spacer for maintaining a cell gap of liquid crystal cells is formed between the upper and lower substrates of the display panel 210. The common electrode is formed on the upper substrate in a vertical electric field driving method such as a twisted nematic (TN) mode and a vertical alignment (VA) mode, and formed on the lower substrate along with the pixel electrode in a horizontal electric field driving method such as a in-plane switching (IPS) mode and a fringe field switching (FFS) mode.

The liquid crystal mode of the display panel 210 may be implemented in any liquid crystal mode associated with the foregoing TN mode, VA mode, IPS mode and FFS mode.

The display panel 210 displays a left-eye image and a right-eye image in a time division manner. The display panel displays only a left-eye image for a first period of time and displays only a right-eye image for a second period of time. For example, the first and the second period of time, respectively, may be set to 1-frame period. The 1-frame period denotes a period during which data is written on all pixels of the display panel.

Referring to FIG. 7, the backlight unit 100 irradiates left-eye convergence light through the first light source 122 to converge light to the viewer's left-eye view zone 162 for a first period of time during which the display panel 200 displays a left-eye image, and irradiates right-eye convergence light through the second light source 124 to converge light to the viewer's right-eye view zone 164 for a second period of time during which the display panel 200 displays a right-eye image. To this end, the backlight unit 100 may include a first and a second light source 122, 124, a light path conversion sheet 130 and a reflecting plate 140.

In other words, the backlight unit 100 may include a first and a second light source 122, 124 configured to provide light to the display panel 200, a light path conversion sheet 130 disposed adjacent to the light sources, and a reflecting plate 140 disposed to face the first and the second light source 122, 124 at an upper edge portion of the light path conversion sheet.

Though a case where a laser light source is used for the first and the second light source 122, 124 is described in this specification, any light source such as a LED light source, a local field emission source, an organic light emitting array (not limited to them), and the like may be also used in addition to the laser light source.

The first and the second light source 122, 124 may have a shape extended in a length direction along a lateral surface of the light path conversion sheet 130, and may be formed with one light source or a plurality of light sources may be arranged in a row.

Though it is illustrated in FIG. 7 that two light sources are provided therein, the number and location of the first and the second light source 122, 124 may not be necessarily limited. Here, the first and the second light source 122, 124, respectively, may include one light source or a plurality of light sources.

When the backlight unit 100 according to another embodiment of the present disclosure is applied during the implementation of planar images, it is configured to individually turn on the first and the second light source 122, 124, respectively. In other words, any one of a plurality of light sources, for example, a first light source and a second light source is controlled to be on, and the remaining one is controlled to be off such that different images are viewed from the viewer's left-eye and right-eye through the display panel 200 to implement a stereoscopic image. Here, the first and the second lateral surface, respectively, denote at least one or more light source.

An expander 152, 154 is disposed between the first and the second light source 122, 124 and the light path conversion sheet 130 to condense light emitted from the light source 120 in a horizontal direction so as to diffuse it in a fan-shaped manner. Here, the expander 152, 154 may include all types of lenses, hologram films, and the like for diffusing light in a fan-shaped manner.

A plurality of scattering patterns 132 configured in a prism shape at regular intervals in a length direction of the light path conversion sheet 130 is formed on an upper surface of the light path conversion sheet 130 to change a light path so as to allow light diffused in a fan-shaped manner from the first and the second light source 122, 124 and reflected through the reflecting plate 140 to be directed to the display panel. Here, the scattering patterns 132 may be formed with any pattern capable of diffusing and scattering light instead of a prism-shaped pattern. For example, they may be formed in various forms such as a hemispherical pattern, a conical pattern or a dot pattern. The scattering patterns 132, respectively, may be formed in a direction crossing a travelling direction of light emitted from the first and the second light source 122, 124, namely, a width direction of the light path conversion sheet 130.

The light path conversion sheet 130 may include a hologram film or the like using a diffractive optic in addition to a geometrical optical method such as a prism diffusion sheet, a reflector, and the like. Accordingly, the light path conversion sheet 130 performs the role of changing a light path so as to allow light diffused in a fan-shaped manner from the first and the second light source 122, 124 and reflected through the reflecting plate 140 to be directed to the display panel, thereby allowing lightweight and low profile designs as well as additionally removing rigid mechanical structures.

Furthermore, the reflecting plate 140 is formed with a curved-shaped mirror, and disposed at an upper edge portion of the light path conversion sheet 130, namely, an upper surface of the light path conversion sheet 130 located at the farthest from the first and the second light source 122, 124. Here, the reflecting plate 140 is configured such that both ends thereof are bent in an inward direction around the central portion to have a curved surface 140a. Meanwhile, the reflecting plate 140 may include another shaped mirror other than a curved surface, and the mirror may include a reflecting member (including a hologram film or the like) using diffraction in addition to a geometrical optical mirror.

An image being converged to the viewer's left-eye and right-eye through a glasses-free stereoscopic image display device according to another embodiment of the present disclosure will be described in detail with reference to FIGS. 8 through 11.

FIG. 8 is a view schematically illustrating a travelling path of light emitted from a light source as a side view of a stereoscopic image display device to which a backlight unit according to another embodiment of the present disclosure is applied.

FIG. 9 is a plan view schematically illustrating light sources, an exit lens and travelling paths of beams emitted from the light sources as an enlarged plan view of portion "A" of FIG. 8.

FIG. 10 is a side view schematically illustrating light sources, an exit lens and travelling paths of beams emitted from the light sources as an enlarged side view of portion "A" of FIG. 8.

FIG. 11 is a side view schematically illustrating a light path conversion sheet and beam paths refracted and propagated from the light path conversion sheet as an enlarged side view of portion "B" of FIG. 8.

Referring to FIG. 8, only the first light source 122 irradiates light but the second light source 124 does not irradiate light for a first period of time during which the display panel 200 displays a left-eye image. First light irradiated from the first light source 122 is diffused in a fan-shaped manner toward the reflecting plate 140 through the expander 152.

Here, as illustrated in FIG. 9, first light irradiated from the first light source 122 is widely diffused and propagated in a horizontal direction, namely, in a direction of the reflecting plate 140 while passing through the expander 152.

Furthermore, as illustrated in FIG. 10, the first light is diffused in a horizontal direction but converged without being diffused in a vertical direction while passing through the expander 152, and propagated in a direction of the reflecting plate 140.

The first light widely propagated as described above is reflected through the curved surface 140a of the reflecting plate 140, and then the light path thereof is primarily converted into straight light in parallel to the light path conversion sheet 130.

As illustrated in FIG. 11, the first light primarily converted into parallel straight light as described above is diffracted by a plurality of scattering patterns 132 formed on an upper surface thereof while being propagated along a length direction of the light path conversion sheet 130 and the light path is secondarily converted and propagated to the display panel 200.

Accordingly, as illustrated in FIG. 8, the secondarily converted first light is emitted in the viewer's direction by a plurality of scattering patterns 132 and entered to the viewer's left-eye view zone 162 through the display panel 200, thereby allowing the viewer to view a left-eye image of the display panel 200 through the left-eye view zone 162.

On the other hand, as illustrated in FIG. 8, only the second light source irradiates light but the first light source does not irradiate light for a second period of time during which the display panel 200 displays a right-eye image. Second light irradiated from the second light source 124 is diffused in a fan-shaped manner toward the reflecting plate 140 through the expander (not shown, refer to reference numeral 154 in FIG. 7).

The second light widely propagated as described above is reflected through the curved surface 140a of the reflecting plate 140, and then the light path thereof is primarily converted into straight light in parallel to the light path conversion sheet 130.

As illustrated in FIG. 11, the second light primarily converted into parallel straight light as described above is diffracted by a plurality of scattering patterns 132 formed on an upper surface thereof while being propagated along a length direction of the light path conversion sheet 130 and the light path is secondarily converted and propagated to the display panel 200.

Accordingly, as illustrated in FIG. 8, the secondarily converted second light is emitted in the viewer's direction by a plurality of scattering patterns 132 and entered to the viewer's right-eye view zone 164 through the display panel 200, thereby allowing the viewer to view a right-eye image of the display panel 200 through the right-eye view zone 164.

FIG. 12 is a simulation view schematically illustrating light travelling paths in a backlight unit of an image display device according to an embodiment of the present disclosure.

As illustrated in FIG. 12, a light guide plate may be removed from a backlight unit according to the present disclosure, thereby suppressing one of major disadvantages when using a wedge-type light guide plate in the related art, namely, a problem of causing a lot of light loss, and eliminating loss of emitted light on the light path as well as facilitating design and manufacture to allow light path setting to be easily and precisely controlled to a desired position.

FIG. 13 is a simulation view schematically illustrating light travelling paths when using individual R, G and B laser light sources in a backlight unit of an image display device according to another embodiment of the present disclosure.

As illustrated in FIG. 13, the present disclosure may use a laser light source, thereby allowing differentiated superior color tones when using individual R, G and B laser light sources.

A backlight unit according to the present disclosure and an image display device using the same may remove a wedge-type light guide plate using a special mold injection method in the related art that requires a difficult and expensive manufacturing process.

Furthermore, a backlight unit according to the present disclosure and an image display device using the same may remove a light guide plate in the related art, thereby allowing lightweight and low profile designs as well as additionally removing rigid mechanical structures.

In addition, a backlight unit according to the present disclosure and an image display device using the same may use individual R, G and B laser light sources, thereby allowing a full-color representation as well as enhancing color tones. In other words, when RGB LEDs are used rather than white LEDs (the same for laser), each coverable peak wavelength may be high and wide, thereby providing a lot of expressible vivid colors. Methods using RGB LEDs have been previously attempted in various ways, but have required a separate member for mixing each color, whereas the present disclosure has a significantly long optical distance in which colors are mixed until prior to being emitted as an additional effect along with the removal of a light guide plate, and thus colors are automatically mixed, thereby immediately implementing a full-white light source using RGB LEDs or RGB lasers.

Moreover, a backlight unit according to the present disclosure and an image display device using the same may use a polarized laser light source, thereby removing one polarized film that has been adhered to the display device between two sheets of polarized films that have been necessarily required for the display device in the related art. In other words, the liquid crystal display (LCD) device in the related art fills and rotates liquid crystal, which is an anisotropic material, between two polarized plates with a polarized axis at 90 degrees to adjust brightness by varying the polarized axis like a valve, wherein the two polarized plates are necessarily required, but the removal of the polarized plates is possible when using an initially polarized light source.

Accordingly, a laser light source used in the present disclosure may be a polarized light source, and thus has an effect that has passed through a polarized plate when polarized light is well maintained on the path, thereby allowing the removal of one polarized plate between two polarized plates that have been used in a liquid crystal display device in the related art.

On the other hand, a backlight unit according to the present disclosure and an image display device using the same may remove a wedge-type light guide plate in the related art, thereby increasing luminous efficiency by more than 300%.

However, it may be understood by those skilled in the art that the foregoing present invention can be implemented in other specific forms without changing the technical concept and essential characteristics thereof. Therefore, it should be understood that the foregoing embodiments are merely illustrative but not restrictive in all aspects.

The scope of the present invention is defined by the appended claims rather than by the detailed description, and all changes or modifications derived from the meaning, scope and equivalent concept of the claims should be construed to be embraced by the scope of the present invention.

The following list forms part of the description
1. A backlight unit, comprising:
   a light source configured to provide light to a display panel;
   a light path conversion sheet disposed adjacent to the light source; and
   a reflecting plate disposed to face the light source at an upper edge portion of the light path conversion sheet.
2. The backlight unit of embodiment 1, wherein a plurality of prism patterns are formed to be separated from each other along a length direction on the light path conversion sheet.
3. The backlight unit of embodiment 1, wherein the light path conversion sheet is one of a prism diffusion sheet, a reflector and a hologram film.
4. The backlight unit of embodiment 1, wherein the reflecting plate is a curved-shaped mirror.
5. The backlight unit of embodiment 1, wherein the light source is a laser light source, a light emitting diode (LED) light source or an organic luminescence emitted diode (OLED).
6. The backlight unit of embodiment 5, wherein when the light source is a laser light source, an expander is disposed between the laser light source and the light path conversion sheet.
7. An image display device, comprising:
   a display panel configured to display a left-eye image and a right-eye image in a time division manner;
   a first light source configured to irradiate first light for a first period of time in which the left-eye image is displayed and a second light source configured to irradiate second light for a second period of time in which the right-eye image is displayed;
   a light path conversion sheet disposed adjacent to the first and the second light source; and
   a reflecting plate disposed to face the first and the second light source at an upper edge portion of the light path conversion sheet.
8. The image display device of embodiment 7, wherein a plurality of prism patterns are formed to be separated from each other along a length direction on the light path conversion sheet.
9. The image display device of embodiment 7, wherein the light path conversion sheet is one of a prism diffusion sheet, a reflector and a hologram film.
10. The image display device of embodiment 7, wherein the reflecting plate is a curved-shaped mirror.
11. The image display device of embodiment 7, wherein the light source is a laser light source, a light emitting diode (LED) light source or an organic luminescence emitted diode (OLED).
12. The image display device of embodiment 11, wherein when the light source is a laser light source, an expander is disposed between the laser light source and the light path conversion sheet.
13. An image display device, comprising:
   a display panel configured to display an image;
   a light source configured to provide light to the display panel;
   a light path conversion sheet disposed adjacent to the light source; and
   a reflecting plate disposed to face the light source at an upper edge portion of the light path conversion sheet.
14. The image display device of embodiment 13, wherein a plurality of prism patterns are formed to be separated from each other along a length direction on the light path conversion sheet.
15. The image display device of embodiment 13, wherein the reflecting plate is a curved-shaped mirror.
16. The image display device of embodiment 13, wherein the light source is a laser light source, a light emitting diode (LED) light source or an organic luminescence emitted diode (OLED).
17. The image display device of embodiment 16, wherein when the light source is a laser light source, an expander is disposed between the laser light source and the light path conversion sheet.

## Claims

1. A backlight unit (100), comprising:
a light source (120) configured to provide light to a display panel (200);
a light path conversion sheet (130) disposed adjacent to the light source (120); and
a reflecting plate (140) disposed on the upper surface edge portion of the light path conversion sheet (130), the reflecting plate (140) disposed to face the light source (120);
wherein the reflecting plate (140) is formed as a curved-shaped mirror configured to reflect light propagated in a fan-shaped manner from the light source (120) and direct the light to the light path conversion sheet (130), the light conversion sheet (130) comprising a plurality of scattering patterns (132) configured to direct the light to the display panel (200).

2. An image display device, comprising:
a display panel (200) configured to display an image; and
a backlight unit (100) according to claim 1.

3. An image display device, comprising:
a display panel (210) configured to display a left-eye image and a right-eye image in a time division manner;
a backlight unit (100) according to claim 1, wherein the light source (120) comprises a first light source (122) and a second light source (124), wherein the first light source (122) is configured to irradiate first light for a first period of time in which the left-eye image is displayed and the second light source (124) is configured to irradiate second light for a second period of time in which the right-eye image is displayed.

4. The backlight unit of claim 1 or the image display device of claim 2 or 3, wherein a plurality of prism patterns are formed to be separated from each other along a length direction on the light path conversion sheet (130).

5. The backlight unit of claim 1 or the image display device of claim 2 or 3, wherein the light path conversion sheet (130) is one of a prism diffusion sheet, a reflector and a hologram film.

6. The backlight unit of any preceding claim or the image display device of any preceding claim, wherein the light source (120) is a laser light source, a light emitting diode (LED) light source or an organic luminescence emitted diode (OLED).

7. The backlight unit of claim 6 of the image display device of claim 6, wherein when the light source (120) is a laser light source, and an expander (150) is disposed between the laser light source and the light path conversion sheet (130).

## Patentansprüche

1. Hintergrundbeleuchtungseinheit (100), die Folgendes umfasst:
eine Lichtquelle (120), die konfiguriert ist, für ein Anzeigefeld (200) Licht bereitzustellen;
eine Lichtpfadumwandlungsplatte (130), die angrenzend an die Lichtquelle (120) angeordnet ist; und
eine Reflexionsplatte (140), die auf dem Oberseitenkantenabschnitt der Lichtpfadumwandlungsplatte (130) angeordnet ist, wobei die Reflexionsplatte (140) der Lichtquelle (120) zugewandt angeordnet ist; wobei
die Reflexionsplatte (140) als ein gekrümmt geformter Spiegel gebildet ist, der konfiguriert ist, Licht, das sich in einer fächerförmigen Weise von der Lichtquelle (120) ausbreitet, zu reflektieren und das Licht zur Lichtpfadumwandlungsplatte (130) zu leiten, wobei die Lichtpfadumwandlungsplatte (130) mehrere Streumuster (132), die konfiguriert sind, das Licht zum Anzeigefeld (200) zu leiten, enthält.

2. Bildanzeigeeinrichtung, die Folgendes umfasst:
ein Anzeigefeld (200), das konfiguriert ist, ein Bild anzuzeigen; und
eine Hintergrundbeleuchtungseinheit (100) nach Anspruch 1.

3. Bildanzeigeeinrichtung, die Folgendes umfasst:
ein Anzeigefeld (210), das konfiguriert ist, ein Bild für ein linkes Auge und ein Bild für ein rechtes Auge zeitlich multiplexiert anzuzeigen;
eine Hintergrundbeleuchtungseinheit (100) nach Anspruch 1, wobei die Lichtquelle (120) eine erste Lichtquelle (122) und eine zweite Lichtquelle (124) enthält, wobei die erste Lichtquelle (122) konfiguriert ist, erstes Licht für einen ersten Zeitraum, in dem das Bild für ein linkes Auge angezeigt wird, auszustrahlen, und die zweite Lichtquelle (124) konfiguriert ist, zweites Licht für einen zweiten Zeitraum, in dem das Bild für ein rechtes Auge angezeigt wird, auszustrahlen.

4. Hintergrundbeleuchtungseinheit nach Anspruch 1 oder Bildanzeigeeinrichtung nach Anspruch 2 oder 3, wobei mehrere Prismenmuster derart gebildet sind, dass sie in einer Längsrichtung auf der Lichtpfadumwandlungsplatte (130) voneinander beabstandet sind.

5. Hintergrundbeleuchtungseinheit nach Anspruch 1 oder Bildanzeigeeinrichtung nach Anspruch 2 oder 3, wobei die Lichtpfadumwandlungsplatte (130) eine Prismendiffusionsplatte, ein Reflektor oder eine Hologrammfolie ist.

6. Hintergrundbeleuchtungseinheit nach einem vorhergehenden Anspruch oder Bildanzeigeeinrichtung nach einem vorhergehenden Anspruch, wobei die Lichtquelle (120) eine Laserlichtquelle, eine Leuchtdiodenlichtquelle (LED-Lichtquelle) oder eine organische lumineszenzemittierende Diode (OLED) ist.

7. Hintergrundbeleuchtungseinheit nach Anspruch 6 der Bildanzeigeeinrichtung nach Anspruch 6, wobei die Lichtquelle (120) eine Laserlichtquelle ist und ein Expander (150) zwischen der Laserlichtquelle und der Lichtpfadumwandlungsplatte (130) angeordnet ist.

## Revendications

1. Unité de rétroéclairage (100), comprenant :
une source de lumière (120) configurée pour fournir de la lumière à un écran d'affichage (200) ;
une feuille de conversion de trajet lumineux (130) disposée de manière adjacente par rapport à la source de lumière (120) ; et
une plaque réfléchissante (140) disposée sur la partie en bordure de la surface supérieure de la feuille de conversion de trajet lumineux (130), la plaque réfléchissante (140) étant disposée face à la source de lumière (120) ;
où la plaque réfléchissante (140) a la forme d'un miroir de forme incurvée configuré pour réfléchir la lumière se propageant en éventail depuis la source de lumière (120) et diriger la lumière vers la feuille de conversion de trajet lumineux (130), la feuille de conversion de trajet lumineux (130) comprenant une pluralité de motifs de diffusion (132) configurés pour diriger la lumière sur l'écran d'affichage (200).

2. Dispositif d'affichage d'image, comprenant :
un écran d'affichage (200) configuré pour afficher une image ; et
une unité de rétroéclairage (100) selon la revendication 1.

3. Dispositif d'affichage d'image, comprenant :
un écran d'affichage (210) configuré pour afficher une image de l'oeil gauche et une image de l'oeil droit d'une manière divisée dans le temps ;
une unité de rétroéclairage (100) selon la revendication 1, dans laquelle la source de lumière (120) comprend une première source de lumière (122) et une seconde source de lumière (124), où la première source de lumière (122) est configurée pour irradier la première lumière pendant une première période de temps durant laquelle l'image de l'oeil gauche est affichée, et la seconde source de lumière (124) est configurée pour irradier la seconde lumière pendant une seconde période de temps durant laquelle l'image de l'oeil droit est affichée.

4. Unité de rétroéclairage selon la revendication 1 ou dispositif d'affichage d'image selon la revendication 2 ou la revendication 3, où une pluralité de motifs en forme de prismes sont formés pour être séparés les uns des autres le long d'une direction longitudinale sur la feuille de conversion de trajet lumineux (130).

5. Unité de rétroéclairage selon la revendication 1 ou dispositif d'affichage d'image selon la revendication 2 ou la revendication 3, où la feuille de conversion de trajet lumineux (130) est une feuille parmi une feuille de diffusion à prismes, un réflecteur et un film hologramme.

6. Unité de rétroéclairage selon l'une quelconque des revendications précédentes ou dispositif d'affichage d'image selon l'une quelconque des revendications précédentes, où la source de lumière (120) est une source de lumière laser, une source de lumière à diode électroluminescente (LED) ou une diode électroluminescente organique (OLED).

7. Unité de rétroéclairage selon la revendication 6 du dispositif d'affichage d'image selon la revendication 6, dans laquelle, lorsque la source de lumière (120) est une source de lumière laser, un expanseur (150) est disposé entre la source de lumière laser et la feuille de conversion de trajet lumineux (130) .
